(19) Europäisches Patentamt
European Patent Office
Office européen des brevets

(11) EP 0 421 293 B1

(12) # EUROPÄISCHE PATENTSCHRIFT

(45) Veröffentlichungstag und Bekanntmachung des Hinweises auf die Patenterteilung:
**28.08.1996 Patentblatt 1996/35**

(51) Int Cl.6: **C09B 67/36**, D06P 1/12

(21) Anmeldenummer: **90118663.5**

(22) Anmeldetag: **28.09.1990**

(54) **Wässrige Präparationen von C.I. Azoic Diazo Components, ihre Herstellung und Verwendung**

Aqueous preparations of C.I. azoic diazo components their manufacture and their use

Préparations aqueuses de composes C.I. azoic diazo leur fabrication et leur utilisation

(84) Benannte Vertragsstaaten:
**CH DE FR GB IT LI**

(30) Priorität: **30.09.1989 DE 3932819**

(43) Veröffentlichungstag der Anmeldung:
**10.04.1991 Patentblatt 1991/15**

(73) Patentinhaber: **HOECHST AKTIENGESELLSCHAFT**
**65926 Frankfurt am Main (DE)**

(72) Erfinder: **Mach, Horst-Roland**
**W-6246 Glashütten (DE)**

(56) Entgegenhaltungen:
**FR-A- 2 334 662** **GB-A- 2 036 810**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 421 293 B1

Printed by Jouve, 75001 PARIS (FR)

## Beschreibung

Das Färben und Bedrucken von Cellulosefasermaterial mit sogenannten Azo-Entwicklungsfarbstoffen nach der Eisfarbentechnik ist schon lange bekannt und wird in der Textilindustrie seit Jahrzehnten ausgeübt.

Entsprechend diesem Prinzip werden auf die Faser applizierte C.I. Azoic Coupling Components dort mit C.I. Azoic Diazo Components in kupplungsfähiger Form vereinigt und setzen sich hier zu unlöslichen, echten Azofarbstoffen um.

Der allgemeine Arbeitsgang zur Erzeugung derartiger Färbungen und Drucke durch Kupplung besteht also im wesentlichen im Grundieren der Ware mit der Kupplungskomponente, kurz als "Naphthol" bezeichnet, und im nachherigen Aufbringen der Diazokomponente.

Von den zur Farbstoffbildung benötigten Grundsubstanzen steht die Diazokomponente im Handel einmal als stabilisierte, kupplungsfähige Diazoniumverbindung, dem sogenannten Echtfärbesalz zur Verfügung und zum anderen aber auch als noch undiazotiertes primäres Amin, der sogenannten Echtfärbebase, welche erst durch Diazotieren in den unmittelbar kupplungsfähigen Zustand übergeführt werden muß.

Aus verschiedenen Gründen geht man in der Praxis jedoch vom Einsatz der fertigen, stabilisierten Diazoniumverbindungen ab und bevorzugt neuerdings das Arbeiten mit den Echtfärbebasen, wobei der zusätzliche aufwendige Prozeß des Diazotierens in Kauf genommen wird.

Von Seiten der Farbstoffhersteller hat es aus diesem Anlaß nicht an Bemühungen gefehlt, die Diazotierung der ins Auge gefaßten Amine so einfach wie möglich zu gestalten.

Da die Diazotierung umso rascher und auch vollständiger verläuft, je kleiner die Partikel der betreffenden Amine sind, ist man zunächst dazu übergegangen, diese Ausgangsstoffe besonders aufzubereiten. Man hat sie - um gleichzeitig das lästige Stauben zu vermeiden - deshalb in fein verteilter Form im wäßrigen Medium dispergiert. Eine solche spezielle Vorbehandlung wird z.B. in der Fachliteratur durch die DE-PS 22 49 533, DE-PS 23 46 502, DE-PS 24 49 783, DE-PS 27 40 587 u.a. niedergelegt.

Das Diazotieren von derart verbraucherfreundlich zugeschnittenen Aminen, in Fachkreisen als Flüssigbasen bezeichnet, verursacht für die Belange der Färberei an sich keine Schwierigkeiten. In Druckereien indessen versucht man darüber hinaus, den Vorgang des Ansetzens der Druckpasten noch mehr handhabungssicher zu machen.

Im Einklang mit diesem Bestreben wird daher in der DE-PS 28 50 901 beschrieben, für die Herstellung von Druckpasten mit kupplungsfähigen Diazoniumverbindungen von zwei getrennten Verdickungen auszugehen. Eine davon soll das dispergierte Amin sowie Natriumnitrit aufnehmen, die andere die notwendige Säure enthalten. Durch Zusammenrühren der beiden verdickten Ansätze entsteht dann die gebrauchsfertige Druckpaste für den sogenannten Basenaufdruck.

Bei der gemeinsamen Applikation von so zubereiteten Druckpasten für die Diazokomponente separat neben denen von Reaktivfarbstoffen auf mit Naphtholaten vorgrundierter Ware hat allerdings sowohl die Variante mit herkömmlichen diazotierten Basen als auch die mit Echtfärbesalzen den Nachteil erbracht, daß im Falle des Einsatzes von flüchtigen Säuren für die Diazotierungsoperation - als eine Folge des damit verbundenen typischen Verhaltens - die vorherrschend durch Dämpfen stattfindende einphasige Fixierung der Reaktivfarbstoffe beeinträchtigt wird. Wegen dieses schädlichen Einflusses wird in der EP-OS 0 372 536 daher vorgeschlagen, im Wasserdampf nicht flüchtige Säuren zum Diazotieren zu verwenden.

Aber selbst die in der geschilderten Weise unter Zuhilfenahme von nicht wasserdampfflüchtigen Säuren modifizierte Technik des Diazotierens-in-der-Paste (DIP-Verfahren) wird in der Druckereibranche immer noch als ein zu umständlicher Prozeß betrachtet, der - sogar in Verbindung mit den sonst günstigen Flüssigbasen - bisher wenig Resonanz gefunden hat. Dafür verantwortlich ist in erster Linie das Erfordernis, zwei Stammverdickungen auf Vorrat zu halten. Dazu kommt noch die Verwendung von Phosphorsäure, einer in der Textilpraxis bislang unüblichen Chemikalie, welche sich trotz allem für den Zweck als nicht wasserdampfflüchtige Säure bei der Durchführung der aus der DE-PS 28 50 901 sowie der EP-OS 0 372 536 bekannten Verfahren als vorteilhaft erwiesen hat. Die Akzeptanz der beiden Arbeitsweisen hängt also weitgehend von der Bereitschaft der Veredler ab, zusätzlich Phosphorsäure zu erwerben.

Die Einfachheit der Verarbeitung von Flüssigbasen aufweisenden Zubereitungen der Diazokomponente regte zu Überlegungen an, um auf dieser Grundlage bequemer verwendbare Produkte zu entwickeln, die dem Fachmann bedeutende Erleichterungen in der gewerbsmäßigen Anwendung bieten.

Im Rahmen eines Gesamtkonzeptes

- Einsatz von Reaktivfarbstoffen im Afrikadruck ohne Alkalizusatz
- auf mit Naphtholat grundierter Ware
- in Kombination mit Echtfärbebasen, diazotiert mit einer nichtflüchtigen Säure, sowie
- Fixieren nach dem Einphasen-Verfahren durch kurzzeitiges Dämpfen (höchstens 8 Minuten)

spielt die Erstellung einer Kerngamme von ohne weitere Umstände sofort anwendungsbereiten Präparationen von

diazotierbaren aromatischen Aminen eine Schlüsselrolle.

Die Aufgabenstellung für die vorliegende Erfindung lautete daher, die Erzeugung von Azo-Entwicklungsfarbstoffen im Basenaufdruck durch geeignete Vorkehrungen rationeller sowie ökonomischer zu gestalten, ohne die Textildruckereibetriebe zu zusätzlicher Beschaffung und Lagerhaltung von nach den herkömmlichen Arbeitsweisen bisher nicht verwendeten Ausgangsstoffen zu zwingen, gleichzeitig dabei aber sicherzustellen, daß dadurch die problemlose einphasige Fixierung von im selben Druckvorgang miteinander applizierten Reaktivfarbstoffen nicht behindert oder gar ausgeschlossen wird.

Dieses Vorhaben wird erfindungsgemäß dadurch gelöst, daß man zu einer Stammverdickung, die Natriumnitrit enthält, eine flüssige, wäßrige Aminpräparation zumischt, die das primäre aromatische Amin (C.I. Azoic Diazo Component) sowie die für die Diazotierung, für die Farbstoffkupplung und gegebenenfalls für die Salzbildung benötigte Säure in Form einer nicht wasserdampfflüchtigen Säure oder einer Mischung solcher Säuren enthält, und mit der so zubereiteten Druckpaste das besagte grundierte Textil bedruckt.

Aufgrund dieser gezielten Maßnahmen erleichtert sich für den Drucker die Herstellung gebrauchsfertiger Druckpasten gegenüber dem Stand der Technik dahingehend, daß

a) nur noch eine einzige Stammverdickung mit Natriumnitrit erforderlich ist, und demzufolge
b) das Ansetzen von solchen Druckpasten allein durch simples Einrühren der erfindungsgemäßen flüssigen Basenzubereitungen in die Stammverdickung a) bewerkstelligt werden kann.

Weitere Vorteile bei der Benutzung der erfindungsgemäßen Präparationen erwachsen durch

c) die staubfreie Verarbeitung derselben,
d) deren Einsatzfähigkeit sowohl im reinen Basenaufdruck als auch im Druck neben Reaktivfarbstoffen,
e) die Vermeidung einer zusätzlichen Lagerung von bisher in Veredlungsbetrieben nicht gebräuchlichen Chemikalien, und vor allem
f) die mühelose Handhabung.

Die Herstellung der flüssigen Präparationen entsprechend dieser Erfindung sowie ihre Verwendung wird nachfolgend beschrieben:

Als diazotierbare Amine (auch Aminoazofarbstoffe) kommen grundsätzlich alle in Betracht, die für die übliche Eisfarbentechnik geeignet sind.

Die aus der Produktion trocken in Pulverform oder als wasserfeuchte Paste anfallenden primären aromatischen Amine (C.I. Azoic Diazo Components) werden mit Wasser und der vorgesehenen, nicht wasserdampfflüchtigen Säure, in der Regel Phosphorsäure, sorgfältig verrührt. Als derartige Säuren können fernerhin auch Zitronensäure, Glykolsäure, Milchsäure, Weinsäure o.a. bzw. Mischungen davon zum Einsatz gelangen.

Die dazu verwendete Säuremenge wird dabei so bemessen, daß sie - ihrem Molgewicht entsprechend - einmal zur Bildung des Aminsalzes und darüber hinaus zur Diazotierung und Einstellung des richtigen Kupplungs-pH-Wertes ausreicht.

Sie beträgt demnach bei Vorliegen der freien primären Amine die 3- bis 4-fache Menge des Gewichts des Amins, bei Vorliegen des Aminsalzes bloß die 1,5- bis 2,5-fache Menge.

Je nach der chemischen Natur und/oder den physikalischen Verhältnissen des Ausgangsamins muß in einzelnen Fällen das Aminsalz zunächst mit Salzsäure gebildet werden, bevor man die nicht wasserdampfflüchtige Säure zugeben kann.

Durch den Zusatz von lösenden oder lösungsvermittelnden und/oder dispergierenden Produkten, z.B. geringer Mengen eines Hydrotrops wie mehrwertige Alkohole, insbesondere Glycerin, oder Oxethylate, kann das Bereiten der Präparation günstig beeinflußt werden.

Falls erforderlich wird in die so gewonnene Lösung des Amins noch zur Stabilisierung eine säure- und elektrolytbeständige Verdickung, vorzugsweise ein hochmolekulares, lineares Polysaccharid der Xanthan-Reihe eingerührt.

Die Anwendung der so erhältlichen flüssigen Präparationen von primären aromatischen Aminen gestaltet sich denkbar einfach:

Es braucht dazu nur eine einzige säurebeständige Stammverdickung auf natürlicher oder bevorzugt synthetischer Basis zusammen mit Natriumnitrit angesetzt und bevorratet zu werden. Zur Herstellung der Druckpasten werden die oben beschriebenen Präparationen einfach in diese Stammverdickung eingerührt und können dann direkt zum Drucken verwendet werden.

Die nachfolgenden Herstellungsbeispiele stecken nur einen Rahmen ab, ohne die Erfindung in irgendeiner Weise einschränken zu wollen.

**Beispiele**

A) Herstellung der Amin-Präparationen

1. Stammfarbe Orange

| | |
|---|---|
| 125 g | von Azoic Diazo Component 2 mit der C.I.-Nr. 37005 (m-Chloranilin) werden mit |
| 165 g | Wasser und |
| 400 g | Phosphorsäure 85 %ig langsam verrührt. Danach werden in diesen Ansatz |
| 260 g | einer 2 %igen Verdickung auf Basis eines hochmolekularen, linearen Polysaccharids der Xanthan-Reihe eingerührt und zum Schluß noch |
| 50 g | Glycerin unter Rühren zugegeben |
| 1000 g. | |

2. Stammfarbe Rot

| | |
|---|---|
| 155 g | von Azoic Diazo Component 10 mit der C.I.-Nr. 37120 (5-Chlor-o-anisidin) werden zur Bildung des Chlorhydrats zunächst in |
| 230 g | Wasser verrührt und dann durch Behandlung mit |
| 100 g | Salzsäure 32,1%ig (20°Bé) gelöst, worauf man diese Lösung mit |
| 240 g | Phosphorsäure 85 %ig langsam unter Rühren versetzt. |
| | Danach werden in diesen Ansatz |
| 225 g | einer 2 %igen Xanthan-Verdickung entsprechend der Stammfarbe 1 eingerührt und zum Schluß noch |
| 50 g | Glycerin unter Rühren zugegeben |
| 1000 g. | |

3. Stammfarbe Bordo

| | |
|---|---|
| 165 g | von Azoic Diazo Component 1 mit der C.I.-Nr. 37125 (2-Nitro-p-anisidin) werden mit |
| 155 g | Wasser und |
| 400 g | Phosphorsäure 85 %ig langsam verrührt. |
| | Danach werden in diesen Ansatz |
| 230 g | einer 2 %igen Xanthan-Verdickung entsprechend der Stammfarbe 1 eingerührt und zum Schluß noch |
| 50 g | Glycerin unter Rühren zugegeben |
| 1000 g. | |

4. Stammfarbe Blau

| | |
|---|---|
| 400 g | der als Sulfat vorliegenden Azoic Diazo Component 35 mit der C.I.-Nr. 37255 [N-(p-Methoxyphenyl)-p-phenylendiamin . 1/2 sulfat] werden mit |
| 200 g | Wasser und |
| 240 g | Phosphorsäure 85 %ig langsam verrührt. |
| | Danach werden diesem Ansatz |
| 110 g | einer 2 %igen Xanthan-Verdickung entsprechend der Stammfarbe 1 eingerührt und zum Schluß noch |
| 50 g | Glycerin unter Rühren zugegeben |
| 1000 g. | |

5. Stammfarbe Schwarz

| | |
|---|---|
| 150 g | von Azoic Diazo Component 38 mit der C.I.-Nr. 37190 (Kupplungsprodukt aus diazotiertem p-Nitroanilin und 2,5-Dimethoxyanilin) werden zur Bildung des Chlorhydrats durch Vermischen mit |
| 300 g | Wasser sowie |
| 50 g | Salzsäure 32,1 %ig (20°Bé) langsam unter Rühren versetzt und in Lösung gebracht. |
| | Danach werden in diesen Ansatz |
| 100 g | Phosphorsäure 85 %ig und |
| 200 g | Zitronensäure eingerührt und zum Schluß noch |
| 200 g | Glycerin unter Rühren zugegeben |
| 1000 g. | |

**B) Verwendung der Amin-Präparationen**

Grundieren des Gewebes

| | |
|---|---|
| 20 g | von Azoic Coupling Component 2 mit der C.I.-Nr. 37505 (2-Hydroxy-3-naphthoylamino-benzol) werden in 1 l heißes Wasser (95°C), das 20 $cm^3$ Natronlauge 32,5 %ig (38°Bé) und 5 g eines Schutzkolloids auf Basis von modifiziertem Eiweiß enthält, eingerührt und gelöst. |

Mit dieser Lösung klotzt man ein Baumwollgewebe bei 80 % Flottenaufnahme (bezogen auf das Gewicht der trockenen Ware) und trocknet es.

**Druckbeispiel 1**

Zum Ansetzen der Druckpaste von einer kupplungsfähigen Diazoniumverbindung werden 800 g einer säurebeständigen Stammverdickung synthetischen Ursprungs vorgelegt, die bereits 6,5 g/kg Natriumnitrit enthält. Dazu werden nun unter Rühren 50 g der gemäß Präparation 1 gewonnenen Stammfarbe Orange zugefügt und das Ganze wird schließlich durch Auffüllen mit Wasser auf 1 kg Gesamtgewicht eingestellt.
Mit der so zubereiteten Druckpaste bedruckt man einen Abschnitt des mit der zuvor erwähnten Kupplungskomponente grundierten Gewebes und erhält einen lebhaften, brillanten Orangeton.

Die Nachbehandlung der erzeugten Druckfärbung wird wie üblich durch zweimaliges alkalisches Seifen und abschließendes Klarspülen mittels Wasser vorgenommen.

**Druckbeispiel 2**

Die Herstellung der ersten Druckpaste erfolgt wie im Druckbeispiel 1 beschrieben, jedoch hier unter Verwendung von Präparation 2 (Stammfarbe Rot).

Die zweite Druckpaste wird wie folgt angesetzt:
Es werden 800 g einer mittelviskosen Alginatverdickung, der man zuvor 20 g/kg von m-Nitrobenzolsulfonsäure als Na-Salz (in Wasser 1:2 gelöst) zugefügt hatte, vorgelegt und sodann unter Rühren

60 g des Reaktivfarbstoffes mit der Formel

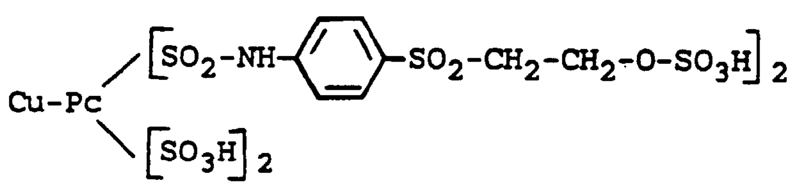

(Cu-Pc = Kupfer-Phthalocyanin)

eingestreut. Daraufhin wird das Ganze mit Wasser auf 1 kg Gesamtgewicht aufgefüllt und 1 Minute gründlich nachgerührt.

Beide Druckpasten werden nun nebeneinander auf das mit der Kupplungskomponente vorgrundierte Gewebe gedruckt und das bedruckte Substrat wird anschließend getrocknet.

Zum Fixieren des Reaktivfarbstoffes wird die so behandelte Ware 8 Minuten bei 102°C mit Sattdampf gedämpft.

Die erzeugte Druckfärbung wird zum Abschluß wie für Reaktivfarbstoffe üblich gewaschen und fertiggestellt. Man erhält als coloristischen Effekt neben einem tiefen Rotton ein brillantes Türkis.

**Druckbeispiel 3**

Zur Herstellung der ersten Druckpaste werden 800 g einer säurebeständigen Stammverdickung wie im Druckbeispiel 1 vorgelegt, die 6,5 g/kg Natriumnitrit enthält. In diese Vorlage trägt man unter Rühren 100 g von Präparation 5 (Stammfarbe Schwarz) ein und füllt mit Wasser auf 1 kg Gesamtgewicht auf, worauf noch 1 Minute nachgerührt wird.

Für die Zubereitung der zweiten Druckpaste werden 800 g einer mittelviskosen Alginatverdickung vorgelegt, die 20 g/kg von m-Nitrobenzolsulfonsäure als Na-Salz (1:2 in Wasser gelöst) enthält. Unter Behandlung mit einem Schnellrührer werden in diesen Ansatz 60 g des Reaktivfarbstoffes mit der Formel

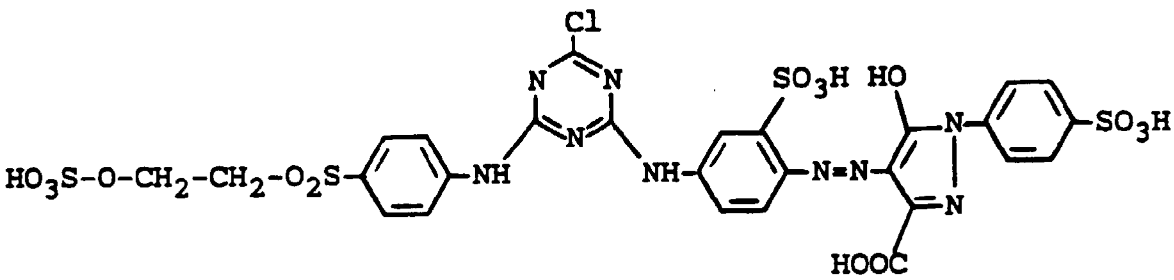

eingestreut und dann wird das Ganze mit Wasser auf 1 kg Gesamtgewicht aufgefüllt. Zum kompletten Lösen des Farbstoffes rührt man die Paste noch weitere 3 Minuten unter Zuhilfenahme des Schnellrührers nach.

Beide Druckpasten werden nun nebeneinander auf das mit der Kupplungskomponente vorgrundierte Gewebe gedruckt und das bedruckte Substrat wird daraufhin getrocknet.

Zum Fixieren des Reaktivfarbstoffes wird die so behandelte Ware 8 Minuten bei 102°C im Sattdampf gedämpft.

Die erzeugte Druckfärbung wird zum Abschluß wie für Reaktivfarbstoffe üblich gewaschen und fertiggestellt. Man erhält als färberisches Ergebnis neben Schwarz ein leuchtendes Goldgelb mit scharf stehenden Konturen.

**Druckbeispiel 4**

Zum Ansetzen der Druckpaste von einer kupplungsfähigen Diazoniumverbindung werden 800 g einer säurebeständigen Stammverdickung wie im Druckbeispiel 1 vorgelegt, die bereits 6,5 g/kg Natriumnitrit enthält. In diese Vorlage werden danach unter Rühren 50 g der gemäß Präparation 2 eingestellten Stammfarbe eingetragen, worauf man - ebenfalls unter der Behandlung mit dem Schnellrührer - noch eine Lösung, bestehend aus

| | |
|---|---|
| 25 g | des Farbstoffes Ingrain Blue 5 mit der C.I.-Nr. 74161:2, |
| 50 g | Phosphorsäure 80%ig (mit Wasser 1:8 verdünnt) sowie |
| 50 g | Wasser |

zufügt. Schließlich wird das Ganze mit Wasser auf 1 kg Gesamtgewicht aufgefüllt.

Man druckt diese Druckpaste nun auf ein bei einer Flottenaufnahme von 80 % (vom Trockengewicht) mit einer heißen wäßrigen Lösung (95°C), enthaltend

| | |
|---|---|
| 20 g/l | von C.I. Azoic Coupling Component 5 mit der C.I.-Nr. 37610 (3,3'-Dimethyl-4,4'-bis-acetoacetylamino-diphenyl), |
| 20 $cm^3$/l | Natronlauge 32,5%ig (38°Bé) und |
| 5 g/l | eines Schutzkolloids auf Eiweiß-Basis, |

geklotztes und bei 100°C getrocknetes Baumwollgewebe auf, das im Anschluß daran wieder getrocknet wird.

Zum Fixieren des Blau-Anteils in der Druckfarbe wird die so behandelte Ware hierauf 5 Minuten bei 102°C im Sattdampf gedämpft.

Danach wird die erzeugte Druckfärbung kalt und heiß mit Wasser gespült, kochend geseift, mit kaltem Wasser erneut gespült und schließlich getrocknet.

Es resultiert auf dem Gewebe ein Druckmuster mit brillantem Grünton auf weißem Grund.

## Patentansprüche

1. Verfahren zur Herstellung von Drucken mit Azo-Entwicklungsfarbstoffen durch Aufdrucken von Diazoniumsalzen auf mit Alkali und Kupplungskomponenten grundierten cellulosehaltigen oder ausschließlich aus Cellulosefasern bestehenden Textilien, dadurch gekennzeichnet, daß man zu einer Stammverdickung, die Natriumnitrit enthält, eine flüssige, wäßrige Aminpräparation zumischt, die das primäre aromatische Amin (C.I. Azoic Diazo Component) sowie die für die Diazotierung, für die Farbstoffkupplung und gegebenenfalls für die Salzbildung benötigte Säure in Form einer nicht wasserdampfflüchtigen Säure oder einer Mischung solcher Säuren enthält, und mit der so zubereiteten Druckpaste das besagte grundierte Textil bedruckt.

2. Verfahren nach Anspruch 1, dadurch gekennzeichnet, daß die nicht wasserdampfflüchtige Säure Phosphorsäure, Zitronensäure, Glykolsäure, Milchsäure oder Weinsäure ist.

3. Verfahren nach Anspruch 1 oder 2, dadurch gekennzeichnet, daß die flüssige, wäßrige Aminpräparation zusätzlich lösungsvermittelnde und/oder dispergierende Mittel enthält.

4. Verfahren nach mindestens einem der Ansprüche 1 bis 3, dadurch gekennzeichnet, daß die flüssige, wäßrige Aminpräparation 0 bis 0,52 Gew.-% eines säure- oder elektrolytbeständigen Verdickungsmittels enthält.

5. Verfahren nach Anspruch 4, dadurch gekennzeichnet, daß das Verdickungsmittel ein Xanthan ist.

6. Verfahren nach mindestens einem der Ansprüche 1 bis 5, dadurch gekennzeichnet, daß man in die zubereitete Druckpaste zusätzlich noch C.I. Ingrain Dyes einträgt.

7. Verfahren nach mindestens einem der Ansprüche 1 bis 6, dadurch gekennzeichnet, daß man neben diesen, die Entwicklung der Azofarbstoffe bewirkenden Druckpasten, auf das alkalisch vorgrundierte Textilgut auch solche mit Reaktivfarbstoffen druckt und letztere durch Dämpfen fixiert.

## Claims

1. A process for producing prints with azo developing dyes by printing cellulose-containing textiles or textiles exclusively composed of cellulose fibers, each of which has been impregnated with alkali and coupling components, with diazonium salts, which process comprises admixing a stock thickener containing sodium nitrite with a liquid aqueous amine preparation containing the primary aromatic amine (C.I. azoic diazo component) and the acid required for diazotization, for dye coupling and, where appropriate, for salt formation in the form of an acid which is not volatile in steam or of a mixture of such acids, and printing said impregnated textile with the printing paste thus prepared.

2. The process as claimed in claim 1, wherein the acid which is not volatile in steam is phosphoric acid, citric acid, glycolic acid, lactic acid or tartaric acid.

3. The process as claimed in claim 1 or 2, wherein the liquid aqueous amine preparation additionally contains solubilizing and/or dispersing agents.

4. The process as claimed in at least one of claims 1 to 3, wherein the liquid aqueous amine preparation contains 0 to 0.52% by weight of an acid- or electrolyte-resistant thickener.

5. The process as claimed in claim 4, wherein the thickener is a xanthan.

6. The process as claimed in at least one of claims 1 to 5, wherein C.I. ingrain dyes are additionally incorporated in the printing paste prepared.

7. The process as claimed in at least one of claims 1 to 6, wherein the textile goods preimpregnated with alkali are not only printed with those printing pastes effective in developing the azo dyes but also with those containing reactive dyes, and the latter are then fixed by steaming.

**Revendications**

1. Procédé pour réaliser des impressions avec des colorants de développement azoïques par impression de sels de diazonium sur des textiles cellulosiques ou constitués exclusivement de fibres de cellulose, ayant reçu une couche de fond d'un alcali et de composants de copulation, caractérisé en ce qu'on mélange à un épaississant maître contenant du nitrite de sodium une préparation d'amines aqueuse liquide, qui contient l'amine aromatique primaire (C.I. Azoic Diazo Component), ainsi que l'acide nécessaire à la diazotation, à la copulation du colorant et éventuellement à la salification, sous forme d'un acide non volatil dans la vapeur d'eau, ou d'un mélange de ces acides, et que l'on imprime le textile ci-dessus, ayant reçu la couche de fond, avec la pâte d'impression ainsi préparée.

2. Procédé selon la revendication 1, caractérisé en ce que l'acide non volatil dans la vapeur d'eau est l'acide phosphorique, l'acide citrique, l'acide glycolique, l'acide lactique ou l'acide tartrique.

3. Procédé selon la revendication 1 ou 2, caractérisé en ce que la préparation aqueuse liquide d'amines contient en outre des tiers-solvants et/ou des dispersants.

4. Procédé selon au moins l'une des revendications 1 à 3, caractérisé en ce que la préparation aqueuse liquide d'amines contient de 0 à 0,52 % en poids d'un épaississant résistant aux acides ou aux électrolytes.

5. Procédé selon la revendication 4, caractérisé en ce que l'épaississant est une gomme xanthane.

6. Procédé selon au moins l'une des revendications 1 à 5, caractérisé en ce qu'on introduit encore dans la pâte d'impression préparée des colorants C.I. Ingrain Dyes.

7. Procédé au moins l'une des revendications 1 à 6, caractérisé en ce que, sur l'article textile ayant subi une couche de fond alcaline, on imprime aussi des pâtes contenant des colorants réactifs, ces derniers étant fixés par vaporisage.